# EUROPÄISCHE PATENTSCHRIFT

(11) **EP 2 334 953 B1**
(45) Veröffentlichungstag und Bekanntmachung des Hinweises auf die Patenterteilung: **12.11.2014**
(21) Anmeldenummer: 09777682.7
(22) Anmeldetag: 05.08.2009
(51) Int. Cl.: F16H 47/02, F16H 61/46, F16H 61/04, F16H 59/70, F16H 61/47

(54) **VERFAHREN ZUM WECHSELN VON GANGSTUFEN UND GETRIEBEANORDNUNG**
METHOD FOR CHANGING GEAR STAGES AND TRANSMISSION ARRANGEMENT
PROCÉDÉ POUR CHANGER DE VITESSES ET AGENCEMENT DE TRANSMISSION

(30) Priorität: 03.09.2008 DE 102008045536
(43) Veröffentlichungstag der Anmeldung: 22.06.2011
(73) Patentinhaber: Robert Bosch GmbH, 70442 Stuttgart (DE)
(72) Erfinder: DSCHIDA, Peter, 89075 Ulm (DE); RIGGENMANN, Frank, 89284 Pfaffenhofen (DE); VOGL, Karl-Heinz, 88444 Ummendorf (DE); FRASCH, Michael, 89081 Ulm (DE); HENSE, Heinz, 89231 Neu-Ulm (DE)
(74) Vertreter: Thürer, Andreas
(86) Internationale Anmeldenummer: PCT/EP2009/005679
(87) Internationale Veröffentlichungsnummer: WO 2010/025801

(56) Entgegenhaltungen:
- EP-A- 1 076 194
- EP-A- 1 236 933
- EP-A- 1 936 243
- US-A1- 2001 041 645

## Beschreibung

Die Erfindung betrifft ein Verfahren zum Wechseln von Gangstufen in einem Getriebe mit einem hydrostatischen Getriebe und einem nachgeschalteten Schaltgetriebe sowie eine Getriebeanordnung, insbesondere für Fahrantriebe.

Aus der DE 10 2005 058 937 A1 ist ein Fahrantrieb mit einem hydrostatischen Getriebe und einem damit verbundenen Schaltgetriebe bekannt. Solche Getriebeanordnungen werden beispielsweise für Fahrantriebe von Bau-, Land- und Forstmaschinen oder ähnliche Fahrzeuge eingesetzt. Das dem hydrostatischen Getriebe nachgeschaltete Schaltgetriebe verfügt über zumindest zwei Gangstufen, bei deren Wechsel mittels einer Synchronisiereinrichtung die Drehzahl des Hydromotors des hydrostatischen Getriebes der jeweiligen Fahrsituation und damit der Drehzahl der Getriebeeingangswelle des nachgeschalteten Schaltgetriebes angepasst wird. Um diese Drehzahlanpassung zu vereinfachen, Schaltrucke zu verhindern und insgesamt den Fahrkomfort zu verbessern sowie die Belastung und damit den Verschleiß der Getriebeanordnung zu vermindern, wird es dort vorgeschlagen, den hydrostatischen Motor während des Schaltvorgangs so einzustellen, dass die Drehzahl des Hydromotors geringfügig über der exakt zu einer Fahrsituation passenden Drehzahl liegt. Wurde die Drehzahl des Hydromotors entsprechend angehoben, so wird in dem nachgeschalteten Schaltgetriebe der einzulegende Gang eingelegt.

Problematisch an der beschriebenen Getriebeanordnung bzw. dem Verfahren zum Einlegen einer Gangstufe in dem nachgeschalteten Schaltgetriebe ist es, dass in bestimmten Situationen das sichere Einlegen des einzulegenden Gangs nicht gewährleistet werden kann. Insbesondere kann es beispielsweise aufgrund von Temperaturschwankungen und Fertigungstoleranzen dazu kommen, dass sich der durch einen Bediener des Fahrzeugs vorgegebene einzulegende gang nicht erfolgreich einlegen lässt. Es sind jedoch bei dem aus der DE 10 2005 058 937 A1 bekannten Fahrantrieb seitens der Getriebeanordnung und des Verfahrens zum Wechseln der Gänge keine Maßnahmen vorgesehen, die das korrekte Einlegen einer Gangstufe erfassen. Es bleibt somit letztlich einem Bediener überlassen, das korrekte Einlegen einer Gangstufe zu überwachen und gegebenenfalls den Gangwechsel zu wiederholen.

Auch aus der gattungsbildenden EP 1 076 194 A2 ist ein Fahrantrieb mit einem hydrostatischen Getriebe und einem damit verbundenen Schaltgetriebe bekannt. Bei diesem Fahrantrieb ist anders als bei dem Fahrantrieb nach der DE 10 2005 058 937 A1 nur die Pumpe des hydrostatischen Getriebes verstellbar. Der Hydromotor ist ein Konstantmotor. Bei dem aus der EP 1 076 194 A2 bekannten Fahrantrieb wird, wenn nach der Eingabe eines Schaltwunsches der neue Gang nach einer gewissen Zeit noch nicht eingelegt ist, wieder die Ursprungsgangstufe eingelegt und der erfolglose Versuch zu einem Gangwechsel durch eine Leuchtanzeige angezeigt. An die Pumpe wird nach einem fehlgeschlagenen Versuch des Gangwechsels ein Signal zur Einstellen eines Hubvolumens null gegeben.

Der Erfindung liegt die Aufgabe zugrunde, ein Verfahren zum Wechseln von Gangstufen in einem einem hydrostatischen Getriebe nachgeschalteten Schaltgetriebe zu schaffen, durch das der Bediener entlastet ist.

Die Aufgabe wird durch das erfindungsgemäße Verfahren mit den Merkmalen des Patentanspruchs 1 gelöst.

Bei dem erfindungsgemäßen Verfahren zum Wechseln von Gangstufen bei einer Getriebeanordnung mit einem hydrostatischen Getriebe und einem damit verbundenen, nachgeschalteten Schaltgetriebe wird zunächst ein Schaltwunsch ermittelt. Ein solcher Schaltwunsch kann unmittelbar durch eine Bedienervorgabe erfolgen, wie es in Nutzfahrzeugen wie land- oder forstwirtschaftlichen Maschinen üblich ist. Hier wird durch einen Bediener z. B. durch einen Auswahlhebel entweder beispielsweise eine Arbeitsgang oder eine Schnellgang ausgewählt. Aufgrund des ermittelten Schaltwunsches werden dann das hydrostatisches Getriebe und das nachgeschaltete Schaltgetriebe so angesteuert, dass ein Wechsel der Gangstufen erfolgt. Dieser Gangstufenwechsel selbst wird dabei in an sich bekannter Weise ausgeführt. Erfindungsgemäß wird dann erfasst, ob der Gangstufenwechsel erfolgreich war, also die aufgrund des ermittelten Schaltwunsches einzulegende Gangstufe des nachgeschalteten Getriebes erfolgreich eingelegt wurde. Wird dabei erkannt, dass die einzulegende Gangstufe nicht erfolgreich eingelegt worden ist, so wird die Ursprungsgangstufe wieder eingelegt. Die Ursprungsgangstufe ist dabei diejenige Gangstufe, welche im Zeitpunkt des Erfassens des Schaltwunsches eingelegt war. Nachdem die Ursprungsgangstufe wieder eingelegt wurde, wird dann automatisch, ohne Zutun des Bedieners erneut das nachgeschaltete Schaltgetriebe zum Einlegen der einzulegenden Gangstufe angesteuert, um den ermittelten Schaltwunsch des Bedieners auszuführen.

Durch das erneute Einlegen der Ursprungsgangstufe wird oftmals erreicht, dass beispielsweise Verspannungen im Getriebe, die zu einem Nichteinlegen des einzulegenden Gangs führen, überwunden werden können, so dass bei einem nachfolgenden Schaltversuch der einzulegende Gang tatsächlich eingelegt werden kann. Das Zurückwechseln in den Ursprungsgang erfolgt dabei ohne weiteres Zutun eines Bedieners. Dieser kann sich darauf beschränken, einen entsprechenden Schaltwunsch einmalig vorzugeben. Lässt sich der einzulegende Gang nicht sofort und ohne weiteres einlegen, so wird durch die Getriebeanordnung automatisch zunächst wieder der Ursprungsgang eingelegt, bevor ein erneuter Versuch unternommen wird, die dem Schaltwunsch entsprechende Gangstufe einzulegen.

Die Anzahl aufeinanderfolgender, nicht erfolgreicher Versuche, den einzulegenden Gang einzulegen, wird von der elektronischen Steuereinheit erfasst. Bei Erreichen einer maximalen Anzahl erfolgloser Versuche, einen Gang einzulegen, wird der Ursprungsgang eingelegt und ein erneuter Versuch, den eigentlich aufgrund des Schaltwunsches einzulegenden Gang einzulegen, wird erst wieder durchgeführt, wenn ein neuer Schaltwunsch ermittelt wird.

Die Unteransprüche betreffen vorteilhafte Weiterbildungen des erfindungsgemäßen Verfahrens.

Insbesondere ist es zur Vermeidung von großen Drehzahlsprüngen, die durch die Synchronisationsvorrichtung des nachgeschalteten Schaltgetriebes kompensiert werden müssen, vorteilhaft, beim Einlegen der Ursprungsgangstufe gleichzeitig den Hydromotor zur Synchronisation so zu verschwenken, dass seine Drehzahl einer Zieldrehzahl zum Einlegen dieser Gangstufe entspricht. Diese Zieldrehzahl kann diejenige Drehzahl sein, die exakt der Synchronisationsdrehzahl einer Abtriebswelle des Hydromotors mit einer Eingangswelle des nachgeschalteten Schaltgetriebes entspricht. Es ist jedoch ebenso möglich, eine andere Zieldrehzahl auf Basis der Synchrondrehzahl zu ermitteln, wie es beispielsweise aus der oben bereits genannten DE 10 2005 058 937 A1 bekannt ist. In diesem Fall liegt die Zieldrehzahl des Hydromotors geringfügig über der Synchrondrehzahl, so dass eine Annäherung der Drehzahl des Hydromotors durch die Synchronisiereinrichtung des nachgeschalteten Schaltgetriebes jeweils "von oben" erfolgt.

Besonders bevorzugt ist es vor dem erneuten Ansteuern des Schaltgetriebes zum Einlegen der einzulegenden Gangstufe den Hydromotor so zu verschwenken, dass dessen Drehzahl einer Zieldrehzahl zum Einlegen dieser einzulegenden Gangstufe entspricht. Das Ermitteln der Zieldrehzahl und Ansteuern des Hydromotors erfolgt dabei jeweils durch die elektronische Steuereinheit selbsttätig, so dass eine Maßnahme seitens eines Bedieners des Fahrzeugs bzw. Fahrantriebs nicht erforderlich ist. Unter Verschwenken wird im Zusammenhang mit der vorliegenden Erfindung allgemein das Einstellen des Schluckvolumens des Hydromotors verstanden.

Vorzugsweise wird das hydrostatische Getriebe und das nachgeschaltete Schaltgetriebe auch bei Vorliegen eines Schaltwunsches nur dann betätigt und zum Wechsel der Gangstufen angesteuert, wenn sich der Antrieb in einem zulässigen Schaltfenster befindet. Durch die Definition und Überwachung eines zulässigen Schaltfensters wird vermieden, dass beispielsweise ein Zurückschalten durchgeführt wird, welches zu einer unzulässig hohen Drehzahl seitens des Hydromotors oder einer kritischen Eingangsdrehzahl des Schaltgetriebes führen würde. Das Schaltfenster legt dabei für jede Gangstufe des nachgeschalteten Schaltgetriebes individuell fest, bei welcher Geschwindigkeit des Fahrzeugs im Falle eines Fahrantriebs eine Gangstufe zulässig ist. Nur wenn dieser Geschwindigkeitsbereich vorliegt, wird ein Wechsel in diese Gangstufe vorgenommen. Dabei ist es besonders bevorzugt, eine Geschwindigkeitskenngröße zu erfassen und mit einem von dem einzulegenden Gang abhängigen Kenngrößenbereich zu vergleichen. Eine solche Geschwindigkeitskenngröße kann beispielsweise eine Drehzahl der Abtriebswelle des nachgeschalteten Schaltgetriebes sein. Ebenso ist jedoch eine andere, mit der Geschwindigkeit des angetriebenen Fahrzeugs im Zusammenhang stehende Größe als Geschwindigkeitskenngröße einsetzbar. Beispielsweise kann unmittelbar ein Tachosignal verwendet werden. Die Geschwindigkeitskenngröße kann auch mittelbar durch Berechnung aus dem bekannten Übersetzungsverhältnis der einzulegenden Gangstufe sowie der bekannten Hydromotordrehzahl vor dem Ermitteln eines Schaltwunsches berechnet werden.

Zur Feststellung, ob eine einzulegende Gangstufe erfolgreich eingelegt ist, wird vorzugsweise ein Positionssignal eingelesen. Dieses Positionssignal übermittelt eine Information bezüglich einer Schaltstellung des nachgeschalteten Schaltgetriebes. Möglichkeiten zur Erfassung der Schaltstellung des nachgeschalteten Getriebes sind beispielsweise die Überwachung der Position einer den Gangwechsel im Getriebe vornehmenden Vorrichtung. Im Falle eines herkömmlichen Schaltgetriebes kann dies das Schieberad sein, welches das jeweilige Losrad einer Gangstufe drehfest mit der Getriebewelle verbindet. Die Erfassung der Position eines solchen Schieberads kann dabei entweder indirekt durch Erfassung der Position der zugeordneten Betätigungsvorrichtung oder aber unmittelbar im Getriebe durch Erfassung der Position des Schieberads erfolgen.

Zur Ermittlung, ob die einzulegeride Gangstufe erfolgreich eingelegt ist, wird vorzugsweise das Positionssignal erst nach einem festgelegten Zeitintervall nach Ermittlung des Schaltwunsches eingelesen. Die Zeitabläufe des Getriebes sind aufgrund des automatisierten Ablaufs bei einem erfolgreich durchgeführten Gangstufenwechsel im wesentlichen immer konstant. Somit ist im Regelfall der Schaltvorgang nach einer bestimmten Zeit ab Ermittlung des Schaltwunsches oder dem Wiedereintritt in das Schaltfenster abgeschlossen. Nach diesem Zeitpunkt wird das Positionssignal eingelesen und es kann unmittelbar festgestellt werden, ob der Schaltvorgang erfolgreich war, der einzulegende Gang also erfolgreich eingelegt wurde.

Ein Ausführungsbeispiel zur Durchführung des erfindungsgemäßen Verfahrens sowie eine entsprechende Getriebeanordnung sind in den Zeichnungen dargestellt und werden in der nachfolgenden Beschreibung detailliert erläutert. Es zeigen:
- Fig. 1: eine schematische Darstellung eines Fahrantriebs mit einer erfindungsgemäßen Getriebeanordnung zur Durchführung des erfindungsgemäßen Verfahrens; und
- Fig. 2: ein Ablaufdiagramm zur Verdeutlichung des Ablaufs des erfindungsgemäßen Verfahrens.

Ein stark vereinfachter Fahrantrieb 1, wie er beispielsweise in Baumaschinen oder land- bzw. forstwirtschaftlichen Maschinen verwendet wird, umfasst einen Antriebsmotor 2, der in der Regel als Dieselbrennkraftmaschine ausgeführt ist. Dieser Antriebsmotor 2 zum Erzeugen eines primären Antriebsmoments ist mit einem hydrostatischen Getriebe 3 verbunden. Das hydrostatische Getriebe 3 ist andererseits mit einem nachgeschalteten Schaltgetriebe 4 verbunden. Mittels des nachgeschalteten Schaltgetriebes 4, das zumindest zwei Gangstufen 10, 11 aufweist, lässt sich somit der erreichbare Fahrgeschwindigkeitsbereich des mittels des Fahrantriebs 1 angetriebenen Fahrzeugs vergrößern.

Das hydrostatische Getriebe 3 ist in seinem Übersetzungsverhältnis stufenlos einstellbar. Der Antriebsmotor 2 treibt hierzu über eine mechanische Verbindung eine hinsichtlich ihres Fördervolumens einstellbare Hydropumpe 5 an. Die Hydropumpe 5 ist im dargestellten Ausführungsbeispiel in einem geschlossenen hydraulischen Kreislauf mit einem, ebenfalls verstellbaren Hydromotor 6 verbunden. Hydropumpe 5 und Hydromotor 6 sind vorzugsweise Axialkolbenmaschinen in Schrägachsen- oder Schrägscheibenbauweise.

Im dargestellten Ausführungsbeispiel, in dem das nachgeschaltete Schaltgetriebe 4 lediglich zwei Gangstufen aufweist, ist in dem Schaltgetriebe 4 eine Getriebeeingangswelle 7 sowie eine Getriebeausgangswelle 8 vorgesehen. Die Getriebeeingangswelle 7 ist mit einer Hydromotorabtriebswelle 9 verbunden. Zur Realisierung der ersten Gangstufe 10 und der zweiten Gangstufe 11 ist jeweils ein Zahnradpaar vorgesehen. Das Zahnradpaar der ersten Gangstufe 10 weist ein erstes Losrad 10.1 und ein erstes Festrad 10.2 auf. In entsprechender Weise weist die zweite Gangstufe 11 ein Zahnradpaar mit einem zweiten Losrad 11.1 und einem zweiten Festrad 11.2 auf. Die beiden Festräder 10.2. und 11.2 sind permanent drehfest mit der Getriebeausgangswelle 8 verbunden. Dagegen können sich die beiden Losräder 10.1 und 11.1 relativ zu der Getriebeeingangswelle 7 drehen. Das erste Losrad 10.1 befindet sich im permanenten Eingriff mit dem ersten Festrad 10.2. Das zweite Losrad 11.1 befindet sich im permanenten Eingriff mit dem zweiten Festrad 11.2.

Zur Erzeugung einer drehfesten Verbindung zwischen jeweils einem der beiden Losräder 10.1 oder 11.1 mit der Getriebeeingangswelle 7 und damit zum Einlegen der ersten Gangstufe 10 oder der zweiten Gangstufe 11 ist ein Schieberad 12 vorgesehen.

In nicht dargestellter Weise kann das Schieberad 12, welches permanent drehfest, aber axial verschiebbar mit der Getriebeeingangswelle 7 verbunden ist, in Eingriff mit einem der beiden Losräder 10.1 oder 11.1 gebracht werden. Dabei erfolgt ein Drehzahlangleich zwischen dem jeweiligen Losrad 10.1 oder 11.1 und dem Schieberad 12 durch eine Synchronisiervorrichtung. Auf diese Weise wird die Drehzahl der Getriebeeingangswelle 7 und somit letztlich des Hydromotors 6 entsprechend des Übersetzungsverhältnisses der einzulegenden Gangstufe 10 oder 11 an die Drehzahl der Getriebeausgangswelle 8 angeglichen.

Zur Betätigung des Schieberads 12 und somit zum Wechseln der Gangstufen 10, 11 ist eine Betätigungsvorrichtung 13 vorgesehen. Diese ist im dargestellten Ausführungsbeispiel als doppelt wirkender Hydraulikzylinder ausgeführt, wobei die Drücke in den beidseits eines Betätigungskolbens ausgebildeten Druckkammern der Betätigungsvorrichtung 13 mittels eines Schaltventils 14 eingestellt werden. Solche Betätigungsvorrichtungen sind an sich bekannt und brauchen daher nachfolgend nicht weiter erläutert zu werden.

Zur Durchführung und Steuerung des zeitlichen Ablaufs des Schaltvorgangs ist eine elektronische Steuereinheit 15 vorgesehen. Diese erhält beispielsweise durch einen Auswahlschalter 16, ein Signal, aus dem ein Schaltwunsch ermittelt wird. Im dargestellten Ausführungsbeispiel mit lediglich zwei Gangstufen 10, 11 ist ein Umschalten zwischen einem langsamen Gang S und einem Schnellgang F möglich. Zudem kann noch eine Leerlaufposition N vorgesehen sein, wie sie der gezeigten Position des nachgeschalteten Schaltgetriebes 4 entspricht.

Zur Überwachung des Schaltzustands des nachgeschalteten Schaltgetriebes 4 sind im dargestellten Ausführungsbeispiel an der Betätigungsvorrichtung 13 ein erster Positionssensor 17 und ein zweiter Positionssensor 18 angeordnet. Die als Erfassungseinrichtung vorgesehenen Positionssensoren 17, 18 sind im dargestellten Ausführungsbeispiel in Form von Endlagenschaltern ausgeführt. Befindet sich der Betätigungskolben des doppelt wirkenden Hydraulikzylinders der Betätigungsvorrichtung 13 in einer Endlage, so ist damit gleichbedeutend, dass das Schieberad 12 sich im Eingriff mit entweder dem ersten Losrad 10.1 oder dem zweiten Losrad 11.1 befindet. Dementsprechend ist die erste Gangstufe 10 oder die zweite Gangstufe 11 eingelegt.

Zur Erfassung der Drehzahl der Getriebeausgangswelle 8 ist ferner ein Drehzahlsensor 19 vorgesehen. Im dargestellten Ausführungsbeispiel ist der Drehzahlsensor 19 so angeordnet, dass er die Drehzahl des ersten Losrads 10.1 erfasst. Da auch die Losräder 10.1 und 11.1 aufgrund des permanenten Eingriffs mit dem jeweiligen Festrad 10.2 oder 11.2 mit einer eindeutig von der Drehzahl der Getriebeausgangswelle 8 abhängigen Drehzahl drehen, kann auch auf der Seite des Getriebeeingangs die Drehzahl der Getriebeabtriebswelle 8 erfasst werden.

Die elektronische Steuereinheit 15 ist ferner mit einer ersten Verstellvorrichtung 20 und einer zweiten Verstellvorrichtung 21 verbunden. Die erste Verstellvorrichtung 20 wirkt auf einen Verstellmechanismus der Hydropumpe 5. In entsprechender Weise wirkt die zweite Verstellvorrichtung 21 auf einen Verstellmechanismus des Hydromotors 6. Durch Ansteuern der Verstellvorrichtungen 20 und 21 ist das Übersetzungsverhältnis des hydrostatischen Getriebes 3 innerhalb konstruktiv vorgegebener Grenzen frei einstellbar.

Während eines Gangstufenwechsels ist es bevorzugt, dass die Hydropumpe 5 so eingestellt wird, dass in dem hydraulischen Kreislauf ein konstanter Druck herrscht. Der hydraulische Kreislauf ist stark vereinfacht dargestellt. Er kann jedoch, wie es insbesondere für Fahrantriebe allgemein bekannt ist, weitere Komponenten insbesondere beispielsweise Speiseeinrichtungen und Sicherungseinrichtungen zur Vermeidung unzulässig hoher Drücke aufweisen.

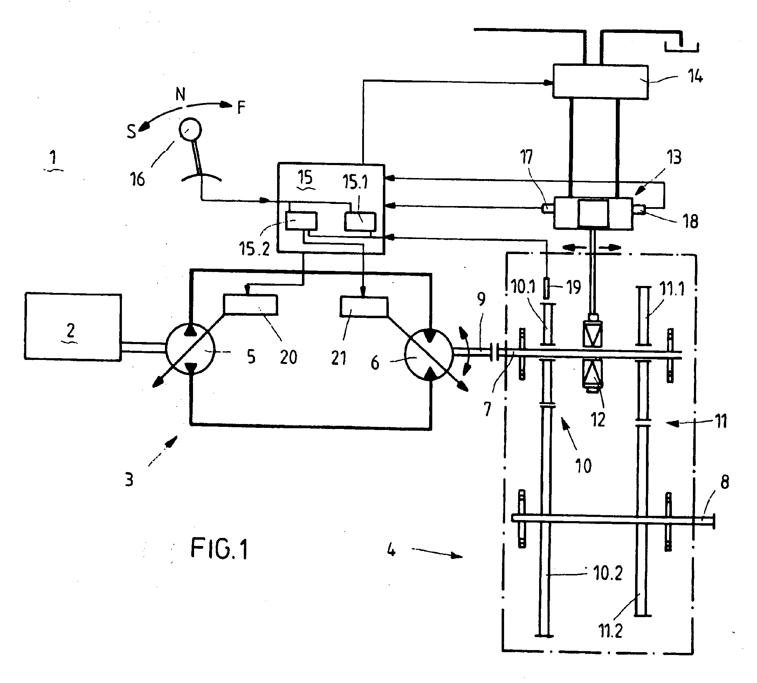

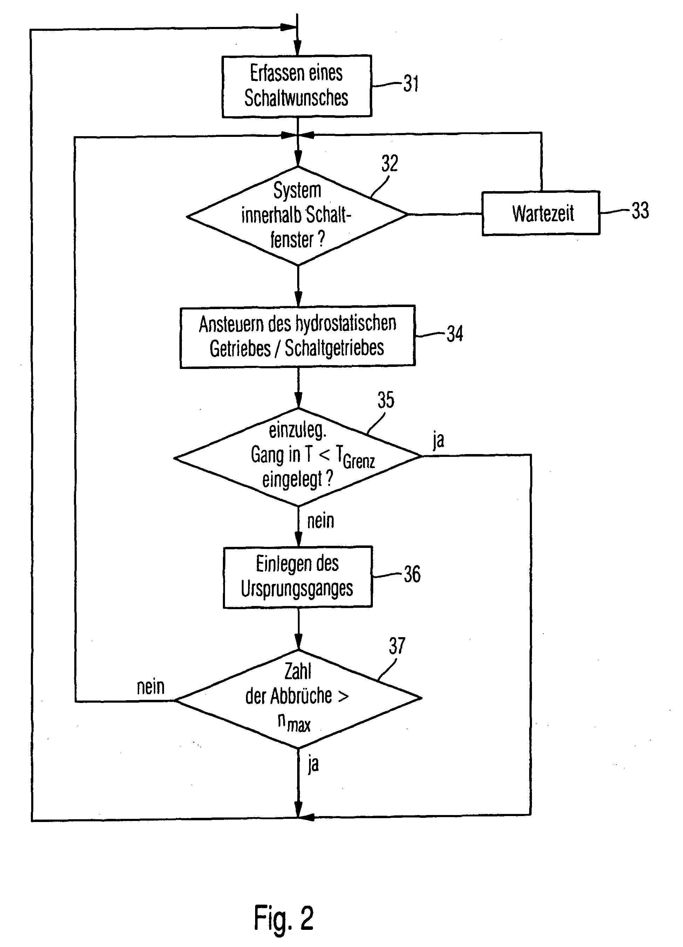

Unter Berücksichtigung der Darstellung der Fig. 1 wird nun anhand der Figur 2 der Ablauf des erfindungsgemäßen Verfahrens verdeutlicht. Zunächst wird beispielsweise nach einer Betätigung des Auswahlschalters 16 ein Schaltwunsch eines Bedieners erfasst (Schritt 31). Das Erzeugen eines Schaltwunsches aufgrund einer Bedienervorgabe ist lediglich beispielhaft zu verstehen. Ein solcher Schaltwunsch könnte beispielsweise auch durch ein mit der elektronischen Steuereinheit 15 verbundenes weiteres Steuergerät verbunden werden.

Wird der Wunsch eines Gangwechsels durch die elektronische Steuereinheit 15 erkannt, so wird zunächst festgestellt, ob das System des Antriebs 1 sich innerhalb eines zulässigen Schaltfensters befindet. Das Schaltfenster legt für jede Gangstufe 10, 11 fest, bei welcher Drehzahl der Abtriebswelle 8 ein Einlegen dieser Gangstufe 10 oder 11 zulässig ist. Dieses Schaltfenster wird für jede Gangstufe 10, 11 individuell festgelegt. Diese Abfrage wird in Schritt 32 durchgeführt. Unzulässig hohe Drehzahlen des Hydromotors 6 nach dem Wechsel der Gangstufe werden somit vermieden. Auch zu niedrigen Drehzahlen hin kann eine Grenze vorgesehen sein.

Die elektronische Steuereinheit 15 weist hierzu eine Vergleichseinrichtung 15.1 auf, der auch das Signal des Auswahlhebels 16 zugeführt wird. Aufgrund des zugeführten Signals des Auswahlhebels 16 ist in der Vergleichseinrichtung 15.1 ermittelbar, welche Gangstufe einzulegen ist. Damit kann ein zulässiger Bereich für eine Geschwindigkeitskenngröße bestimmt werden, innerhalb dessen diese einzulegende Gangstufe aufgrund des Schaltwunschs tatsächlich eingelegt werden kann. Die Geschwindigkeitskenngröße wird im dargestellten Beispiel in Form des Drehzahlsignals durch den Drehzahlsensor 19 ermittelt und ebenfalls der Vergleichseinrichtung 15 zugeführt. Wenn durch die Vergleichseinrichtung 15.1 festgestellt wird, dass sich das System innerhalb des Schaltfensters befindet, so kann ein Ansteuern des hydrostatischen Getriebes 3 sowie des nachgeschalteten Schaltgetriebes 4 erfolgen. Hierzu werden entsprechende Steuersignale an die Verstellvorrichtungen 20, 21 sowie das Schaltventil 14 der Betätigungsvorrichtung 13 ausgegeben. Während die erste Verstellvorrichtung 20 so angesteuert wird, dass der Druck in dem hydrostatischen Kreislauf im Grunde konstant bleibt, wird durch Ansteuern der zweiten Verstellvorrichtung 21 der Hydromotor 6 so eingestellt, dass die Drehzahl der Hydromotorabtriebswelle 9 einer Zieldrehzahl entspricht. Die Zieldrehzahl ist diejenige Drehzahl, bei der eine Synchronisation durch die interne Synchronisiereinrichtung des nachgeschalteten Schaltgetriebes 4 leicht möglich ist. Wie es oben bereits erläutert wurde, kann dies entweder die tatsächliche Synchrondrehzahl oder aber eine nach anderen Gesichtspunkten ausgewählte hiervon abweichende größere oder geringfügig kleinere Drehzahl sein. Die Ermittlung der Zieldrehzahl des Hydromotors 6 erfolgt in einem Ermittlungsabschnitt 15.2 der elektronischen Steuereinheit 15. Dieser Ermittlungsabschnitt 15.2 erhält ebenfalls ein Signal des Auswahlhebels 16 sowie zusätzlich das Drehzahlsignal des Drehzahlsensors 19.

Ferner wird die Betätigungsvorrichtung 13 über das Schaltventil 14 so angesteuert, dass aufgrund der Druckverhältnisse in der Betätigungsvorrichtung 13 das Schieberad 12 in Richtung der einzulegenden Gangstufe 10, 11 bewegt wird. Das Ansteuern des hydrostatischen Getriebes 3 und des Schaltgetriebes 4 erfolgt in Schritt 34. In Schritt 35 wird überwacht, ob der aufgrund des Schaltwunsches einzulegende Gang erfolgreich eingelegt wurde. Hierzu wird ein Positionssignal des ersten Positionssignalgebers 17 und/oder des zweiten Positionssignalgebers 18 in Abhängigkeit davon, welche Gangstufe einzulegen ist, eingelesen und das Ergebnis ausgewertet. Das Einlesen des Positionssignals erfolgt zu einem Zeitpunkt, T_{grenz}, zu dem unter normalen Bedingungen das Einlegen der Gangstufe 10 bzw. 11 abgeschlossen sein müsste. Dieser Zeitpunkt T_{grenz} kann beispielsweise in Versuchen ermittelt werden. Das durch den Zeitpunkt T_{grenz} festgelegte Zeitfenster beginnt mit dem Beginn des Schaltvorgangs zu laufen. Der Beginn des Schaltvorgangs kann entweder ausgelöst werden durch die Vorgabe eines Schaltwunschs seitens des Bedieners oder aber nach einem erfolglosen Schaltversuch, wenn erneut das hydrostatische Getriebe 3 und das Schaltgetriebe 4 zum Wechseln des Gangs angesteuert werden.

War dagegen der einzulegende Gang innerhalb einer Zeit t kleiner als T_{grenz} erfolgreich eingelegt, so wird dies aufgrund der Positionssignale erkannt und es ist der Schaltvorgang beendet und das Verfahren wiederholt sich erst bei Vorgabe eines anderen Schaltwunsches durch erneutes Betätigen des Auswahlhebels 16.

Ist dagegen festgestellt worden, dass der einzulegende Gang innerhalb des vorgegebenen Zeitintervalls zum Zeitpunkt T_{grenz} nicht erfolgreich eingelegt wurde, so wird in Schritt 36 zunächst wieder der Ursprungsgang eingelegt. Beim Einlegen des Ursprungsgangs kann auch für diesen einzulegenden Ursprungsgang durch den Ermittlungsabschnitt 15.2 eine Zieldrehzahl des Hydromotors 6 ermittelt werden und die zweite Verstellvorrichtung 21 so angesteuert werden, dass der Hydromotor 6 auf die dem Ursprungsgang entsprechende Zieldrehzahl eingestellt ist.

Wird der Ursprungsgang in Schritt 36 eingelegt, weil ein erfolgreiches Einlegen der aufgrund des Schaltwunsches einzulegenden Gangstufe nicht möglich war, so wird die Anzahl der aufeinanderfolgenden Abbrüche des Schaltvorgangs in Schritt 37 überprüft. Das heißt, es wird gezählt, wie oft der Ursprungsgang nach einem erfolglosen Schaltversuch wieder eingelegt wurde. Für eine maximale Anzahl von solchen Abbrüchen kann ein Grenzwert nₘₐₓ festgelegt werden. Die Anzahl der Abbrüche wird gezählt und mit diesem Grenzwert verglichen. Wird der Grenzwert nₘₐₓ überschritten, so bleibt der Ursprungsgang eingelegt, bis ein neuer Schaltwunsch durch den Auswahlhebel 16 erkannt wird. Hierzu wäre jedoch die erneute Betätigung des Auswahlhebels 16 nötig. Ein automatischer weiterer Schaltversuch wird in diesem Fall nicht unternommen.

Ist dagegen die Anzahl der Abbrüche kleiner oder gleich als die maximale Anzahl der Abbrüche nₘₐₓ, so wird wieder zurückgesprungen zu Schritt 32 und eine Überprüfung vorgenommen, ob das System innerhalb des Schaltfensters liegt. Wenn ja, kann ein erneuter Versuch zum Wechseln der Gangstufen vorgenommen werden.

Wird dagegen beim Überprüfen des Schaltfensters in Schritt 32 erkannt, dass sich das System nicht innerhalb des zulässigen Schaltfensters befindet, so wird eine Wartezeit gemäß Schritt 33 abgewartet, bevor erneut eine Überprüfung bezüglich des Schaltfensters stattfindet. In verschiedenen Situationen, beispielsweise bei ausrollendem Fahrzeug kann ein Zurückschalten möglich werden, sofern eine gewisse Wartezeit abgewartet wird. Deswegen wird immer dann, wenn ein Schaltwunsch außerhalb des Schaltfensters ermittelt wird, eine Wartezeit abgewartet, bevor eine erneute Überprüfung stattfindet. Befindet sich das System nach Ablauf der Wartezeit wieder innerhalb des Schaltfensters, so kann ein Gangwechsel durchgeführt werden.

## Patentansprüche

1. Verfahren zum Wechseln von Gangstufen (10, 11) in einem Getriebe mit einem hydrostatischen Getriebe (3) und einem nachgeschalteten Schaltgetriebe(4) mit folgenden von einer elektronisches Steuereinheit ausgeführten Verfahrensschritten:
- Ermitteln eines Schaltwunsches (31);
- Ansteuern (34) des hydrostatischen Getriebes (3) und des nachgeschalteten Schaltgetriebes (49 zum Wechseln einer Gangstufe (10, 11) des nachgeschalteten Schaltgetriebes;
- Erfassen, ob eine durch den Gangstufenwechsel einzulegende Gangstufe (10, 11) erfolgreich eingelegt worden ist;
- Einlegen einer Ursprungsgangstufe (10, 11), wenn die einzulegende Gangstufe (10, 11) nicht erfolgreich eingelegt ist;
**gekennzeichnet durch** folgende weitere **durch** die elektronisches Steuereinheit ausgeführte Verfahrensschritte:
- erneutes Ansteuern (36) des nachgeschalteten Schaltgetriebes (4) zum Einlegen der einzulegenden Gangstufe (10, 11),
- Erfassen der Anzahl aufeinanderfolgender, nicht erfolgreicher Versuche, den einzulegenden Gang (10, 11) einzulegen, bis zu einem Grenzwert, wobei nach Überschreiten des Grenzwerts ein erneuter Versuch, den einzulegenden Gang (10, 11) wieder einzulegen, erst durchgeführt wird, wenn einer neuer Schaltwunsch ermittelt wird (31).

2. Verfahren nach Anspruch 1, **dadurch gekennzeichnet, dass** beim erneuten Einlegen (36) der Ursprungsgangstufe (10, 11) gleichzeitig der Hydromotor (6) zur Synchronisation so verschwenkt wird, dass seine Drehzahl einer Zieldrehzahl zum Einlegen dieser Gangstufe (10, 11) entspricht.

3. Verfahren nach Anspruch 1 oder 2, **dadurch gekennzeichnet, dass** vor dem erneuten Ansteuern (36) der einzulegenden Gangstufe (10, 11) der Hydromotor so verschwenkt wird, dass seine Drehzahl einer Zieldrehzahl zum Einlegen dieser Gangstufe (10, 11) entspricht.

4. Verfahren nach einem der Ansprüche 1 bis 3, **dadurch gekennzeichnet, dass** ein Ansteuern des hydrostatischen Getriebes (3) und des nachgeschalteten Getriebes (49 bei einem ermittelten Schaltwunsch nur dann erfolgt, wenn der Antrieb sich in einem zulässigen Schaltfenster (32) befindet.

5. Verfahren nach Anspruch 4, **dadurch gekennzeichnet, dass** zur Ermittlung (32), ob sich der Antrieb (1) in einem zulässigen Schaltfenster befindet, eine Geschwindigkeitskenngröße mit einem von dem einzulegenden Gang (10, 11) abhängigen Kenngrößenbereich verglichen wird.

6. Verfahren nach einem der Ansprüche 1 bis 5, **dadurch gekennzeichnet, dass** zur Feststellung, ob eine einzulegende Gangstufe (10, 11) erfolgreich eingelegt ist, ein Positionssignal bezüglich einer Schaltstellung des nachgeschalteten Schaltgetriebes (4) eingelesen wird.

7. Verfahren nach Anspruch 6, **dadurch gekennzeichnet, dass** das Positionssignal nach einem festgelegten Zeitintervall (T_{grenz}) nach Beginn des Schaltvorganges eingelesen wird.

## Claims

1. Method for changing gear stages (10, 11) in a transmission having a hydrostatic transmission (3) and a manual transmission (4) connected downstream with the following method steps which are carried out by an electronic control unit:
- determining a shifting request (31);
- actuating (34) the hydrostatic transmission (3) and the manual transmission (4) connected downstream to change a gear stage (10, 11) of the manual transmission connected downstream;
- detecting whether a gear stage (10, 11) which is to be engaged by means of the gear stage change has been engaged;
- engaging an original gear stage (10, 11) if the gear stage (10, 11) which is to be engaged has not been successfully engaged;
**characterized by** the following further method steps which are carried out by the electronic control unit:
- renewed actuation (36) of the manual transmission (4) connected downstream, in order to engage the gear stage (10, 11) which is to be engaged,
- detecting the number of successive unsuccessful attempts to engage the gear (10, 11) which is to be engaged, up to a limiting value, wherein after the limiting value is exceed a renewed attempt to engage again the gear (10, 11) which is to be engaged is not carried out until a new shifting request is determined (31).

2. Method according to Claim 1, **characterized in that** when the original gear stage (10, 11) is engaged (36) again, the hydraulic motor (6) is simultaneously pivoted for the purpose of synchronization in such a way that its rotational speed corresponds to a target rotational speed for the engagement of this gear stage (10, 11).

3. Method according to Claim 1 or 2, **characterized in that** before the renewed actuation (36) of the gear stage (10, 11) which is to be engaged, the hydraulic motor is pivoted in such a way that its rotational speed corresponds to a target rotational speed for the engagement of this gear stage (10, 11).

4. Method according to one of Claims 1 to 3, **characterized in that** actuation of the hydrostatic transmission (3) and the transmission (4) connected downstream does not occur, in the event of a shifting request being determined, until the drive is in a permissible shifting window (32).

5. Method according to Claim 4, **characterized in that**, in order to determine (32) whether the drive (1) is in a permissible shifting window, a speed characteristic variable is compared with a characteristic variable range which is dependent on the gear (10, 11) which is to be engaged.

6. Method according to one of Claims 1 to 5, **characterized in that** in order to detect whether a gear stage (10, 11) which is to be engaged has been successfully engaged, a position signal relating to a shifting position of the manual transmission (4) connected downstream is read in.

7. Method according to Claim 6, **characterized in that** the position signal is read in after a defined time interval (Tₗᵢₘᵢₜ) after the start of the shifting process.

## Revendications

1. Procédé pour changer des vitesses (10, 11) dans une transmission avec une transmission hydrostatique (3) et une boîte de vitesses (4) connectée en aval, avec les étapes de procédé suivantes réalisées par une unité de commande électronique :
- transmission d'un souhait de changement de vitesse (31) ;
- excitation (34) de la transmission hydrostatique (3) et de la boîte de vitesses (4) connectée en aval pour changer une vitesse (10, 11) de la boîte de vitesses connectée en aval ;
- détection de si une vitesse (10, 11) à passer lors du changement de vitesse a été passée avec succès ;
- passage d'une vitesse d'origine (10, 11) lorsque la vitesse (10, 11) à passer n'a pu être été passée avec succès ;
**caractérisé par** les étapes de procédé suivantes supplémentaires réalisées par l'unité de commande électronique :
- nouvelle excitation (36) de la boîte de vitesses (4) connectée en aval afin de passer la vitesse (10, 11) à passer ;
- détection du nombre d'essais successifs non réussis de passer la vitesse (10, 11) à passer jusqu'à une valeur limite, un nouvel essai de passer de nouveau la vitesse (10, 11) à passer n'étant réalisé, après dépassement de la valeur limite, que lorsqu'un nouveau souhait de changement de vitesse est transmis (31).

2. Procédé selon la revendication 1, **caractérisé en ce qu'**en cas de nouveau passage (36) de la vitesse d'origine (10, 11), le moteur hydraulique (6) est tourné simultanément pour se synchroniser, de telle sorte que sa vitesse de rotation corresponde à une vitesse de rotation cible permettant de passer cette vitesse (10, 11).

3. Procédé selon la revendication 1 ou 2, **caractérisé en ce qu'**avant la nouvelle excitation (36) de la vitesse (10, 11) à passer, le moteur hydraulique est tourné de telle sorte que sa vitesse de rotation corresponde à une vitesse de rotation cible permettant de passer cette vitesse (10, 11).

4. Procédé selon l'une quelconque des revendications 1 à 3, **caractérisé en ce qu'**une excitation de la transmission hydrostatique (3) et de la transmission (4) connectée en aval ne se produit, en présence d'un souhait de changement de vitesse calculé, que lorsque l'entraînement se trouve dans une fenêtre de changement de vitesse (32) admise.

5. Procédé selon la revendication 4, **caractérisé en ce que** pour déterminer (32) si l'entraînement (1) se trouve dans une fenêtre de changement de vitesse admise, une grandeur caractéristique de vitesse est comparée à une plage de grandeur caractéristique dépendant de la vitesse (10, 11) à passer.

6. Procédé selon l'une quelconque des revendications 1 à 5, **caractérisé en ce que** pour savoir si une vitesse (10, 11) à passer a été passée avec succès, on interprète un signal de position relatif à une position de vitesse de la boîte de vitesses (4) connectée en aval.

7. Procédé selon la revendication 6, **caractérisé en ce que** le signal de position est interprété après un intervalle de temps (T_{grenz}) déterminé après le début du processus de changement de vitesse.
